# EUROPÄISCHE PATENTSCHRIFT

(11) **EP 2 426 256 B1**
(45) Veröffentlichungstag und Bekanntmachung des Hinweises auf die Patenterteilung: **09.10.2013**
(21) Anmeldenummer: 11175685.4
(22) Anmeldetag: 28.07.2011
(51) Int. Cl.: D21G 1/00, D21G 1/02, F16C 13/00

(54) **Biegeausgleichswalze für eine Papier- oder Kartonmaschine**
Deflection compensating roll for a paper and/or paperboard machine
Rouleau à compensation de flexion pour machine à papier ou carton

(30) Priorität: 02.09.2010 DE 102010040149
(43) Veröffentlichungstag der Anmeldung: 07.03.2012
(73) Patentinhaber: Voith Patent GmbH, 89520 Heidenheim (DE)
(72) Erfinder: Krüger, Lars, 47803 Krefeld (DE); Niemann, Jochen, 47804 Krefeld (DE)

(56) Entgegenhaltungen:
- EP-B1- 0 786 054
- WO-A1-00/09805
- WO-A1-88/03610
- US-A- 4 090 282
- US-A- 5 800 324

## Beschreibung

Die Erfindung betrifft eine Walze, insbesondere für eine Papier- oder Kartonmaschine, mit einem umlaufenden Walzenmantel und einem feststehenden Joch, das den Walzenmantel axial durchsetzt, wobei der Walzenmantel durch den Druck in mindestens zwei Druckkammern radial nach außen belastbar ist, wobei die Druckkammern mit in wenigstens einer Axialbohrung im Joch eingebrachten Druckfluidleitungen verbunden sind, und wobei mindestens eine Druckkammer über mindestens einen Anschluss mit mindestens einem Druckraum verbunden ist, der ein veränderbares Volumen aufweist.

Derartige Walzen werden als Biegeausgleichswalzen, als schwimmende Walzen oder als Schuhwalzen zur Bildung eines Nips mit einer Gegenwalze eingesetzt. Durch den Nip wird eine faserförmige Materialbahn, in der Regel eine Papier- oder Kartonbahn geführt und im Nip mit erhöhtem Druck und gegebenenfalls erhöhter Temperatur beaufschlagt.

Die Biegeausgleichswalzen können eine Bohrung im Joch aufweisen, in die als Druckfluidleitungen ein kompaktes Rohrbündel eingeschoben wird. Jedes der Rohre des Rohrbündels steht dann mit einer Druckkammer in Verbindung. Zur Veranschaulichung eines beispielhaften Aufbaus sei die EP 1 380 762 B1 oder auch die 1978 veröffentlichte US 4,090, 282 A (insbesondere die Figuren 4 bis 6) genannt. Bei der letztgenannten sind größenveränderbare Druckräume in der Bohrung vorgesehen.

Die Walze und insbesondere der Walzenmantel wird im Betrieb beispielsweise durch Inhomogenitäten, Anisotropien oder Geometriefehlern, aber auch durch Papierdickenschwankungen mit Erregerkräften beaufschlagt, die ein Schwingen des Walzenmantels bewirken. Die resultierende Schwingbewegung ist in der Regel so klein, dass sie nicht unmittelbar stört. Allerdings prägen sich diese Schwingungsbewegungen nach einem längeren Zeitraum in den Walzenmantel ein, was zu einer weiteren Schwingungsverstärkung führt. Dies macht sich zum einen als akustische Schwingungen bemerkbar, also in einem erhöhten Schallpegel, kann aber auch zu periodischen Dickenschwankungen der Materialbahn führen, der so genannten Barring-Erscheinung.

Die WO 00/09805 A1 offenbart ein Verfahren zum Ändern der Eigenfrequenz eines Spaltwalzenaufbaus, wobei die Lagerelastizität eines hydrostatischen Lagerelementes von zumindest einer Walze bei dem Spaltwalzenaufbau geändert wird, wobei in diesem Zusammenhang die Eigenfrequenz der Walze ebenfalls geändert wird, wobei die Lagerelastizität des hydrostatischen Lagerelementes geändert wird, indem ein Druckspeicher eingeschaltet oder ausgeschaltet wird, der über ein Ventil, das geöffnet und geschlossen werden kann, mit der Druckseite von zumindest einem Belastungselement des hydrostatischen Lagerelementes verbindbar ist

In der Regel sind in einem Kalander mit einer Gegenwalze und einer besagten Walze drei besonders ausgeprägte Eigenfrequenzen messbar. Eine besonders niedrige Eigenfrequenz in der Größenordnung von 10 bis 40 Hz wird durch die Drehfrequenz der Walze oder der Gegenwalze angeregt, so dass die Walze und die Gegenwalze gleichphasig schwingen. Des Weiteren ist eine Eigenfrequenz zu messen, deren Größe bei 100 - 300 Hz liegt. Hier handelt es sich um eine gegenphasige Schwingung zwischen Walze und Gegenwalze, die vorwiegend aus der Jocheigenfrequenz herrührt. Die dritte markante Eigenfrequenz liegt bei 500 bis 800 Hz und beschreibt ebenfalls ein gegenphasiges Schwingen von Walze und Gegenwalze, wobei hier die Kontakteigenfrequenz des Mantels der Walze dominiert.

Die Schwingung des Walzenmantels wird entweder direkt oder durch ein Stützelement auf ein in der Druckkammer angeordnetes Druckmittel übertragen, das dadurch über die Drosselstelle hin- und hergeschoben wird. Dabei wird in der Drosselstelle durch Reibung dem System Schwingungsenergie entzogen, so dass eine Dämpfung der Schwingung erfolgt. Die Drosselstelle muss dabei so ausgelegt sein, dass genügend Öl über die Drosselstelle pulsieren kann.

Um eine Rückkopplung auf die Druckfluidleitung zu vermindern, ist in EP 1 731 668 A1 eine Biegeausgleichswalze vorgeschlagen worden, bei der die Druckkammer über Drosselstellen zunächst mit einem Druckraum verbunden ist, wobei der Druckraum über eine Drosselstelle an einer Druckfluidleitung angeschlossen ist. Zwischen der Druckfluidleitung und der Druckkammer ist also in Reihe ein Druckraum angeordnet, der eine Isolierung der Druckfluidleitung bewirkt. Dabei kann der Druckraum eine teilweise elastische Begrenzungswand aufweisen, durch deren elastische Verformung eine weitere Schwingungsdämpfung erreicht wird.

In DE 10 2007 051 395 A1 ist vorgeschlagen, die Druckkammer einer Durchbiegungseinstellwalze mit Hilfe einer Membran in zwei Kammern aufzuteilen, wobei die einem Stützelement zugewandte Druckkammer über eine Drosselstelle mit einer Druckfluidleitung verbunden ist und die durch die elastische Wand von der Druckkammer abgetrennte Kammer mit einem kompressiblen Medium gefüllt ist. Das kompressible Medium, beispielsweise ein Gas, kann dabei über eine Anschlussleitung in die Kammer eingebracht werden. Bei dieser Lösung erfolgt zum einen eine Schwingungsdämpfung über die Hin- und Herbewegung des Druckmittels über die Drosselstelle und zum anderen durch die Bewegung der elastischen Wand, die die Druckkammer teilweise begrenzt.

Was den Zeichnungen der beiden letztgenannten Anmeldungen (EP 1 731 668 A1 und DE 10 2007 051 395 A1) nicht ohne Weiteres zu entnehmen ist, ist der Nachteil, dass bei derartigen Druckkammern das Volumen in der Regel vergrößert werden muss, um ausreichend Platz für einen großen Druckraum zu schaffen, dessen Speicherkapazität die geforderten Belange erfüllt. Eine Vergrößerung der Druckkammern einerseits, aber auch eine separate Anbringung vom Druckräumen im äußeren Bereich des Jochs andererseits führt zu einer deutlichen Erniedrigung des Widerstandsmomentes (Biegung) des Jochs. Dies ist bei den heutigen Längen und Kräften durch die Gegenwalzen selbstverständlich unerwünscht.

Der Erfindung liegt daher die Aufgabe zugrunde, eine Biegeausgleichswalze zu schaffen, bei der Druckräume oder -speicher auf einfache Weise auch bei bereits bestehenden Walzen nahe der Druckkammer vorgesehen werden können, und zwar so, dass die Druckräume oder -speicher das Biegeverhalten des Jochs nicht oder nur unwesentlich beeinflussen.

Erfindungsgemäß wird diese Aufgabe bei einer Walze der eingangs genannten Art dadurch gelöst, dass der mindestens eine Druckraum und die Druckfluidleitungen benachbart in der Axialbohrung untergebracht sind.

Bei dieser Lösung wird der Druckraum in einem sowieso vorhandenen Hohlraum des Joch mit untergebracht. Es sind also keine das Joch schwächende zusätzliche Aussparungen, insbesondere im radial äußeren Bereich vorzusehen. Es ist auch vorteilhaft, dass die Druckräume relativ nah an die Druckkammern herangebracht werden können, und das sogar bei bereits im Einsatz befindlichen Walzen, wo die Druckräume mit einem möglichst kurzen Umbau in die Walze eingebracht werden sollen.

Die Druckkammern selbst sind wie üblich im Joch angeordnet, wobei in jeder Druckkammer ein Stützelement geführt ist, das durch einen Druck in der Druckkammer mit einer Anlegeseite gegen den Walzenmantel drückbar ist. Das Stützelement ist dabei in der Regel radial in der Druckkammer führbar und begrenzt eine Seite der Druckkammer. Dabei kann zwischen dem Stützelement und einer Umfangsfläche der Druckkammer eine Dichtung angeordnet sein. Das Stützelement bildet eine Seite der Druckkammer. An der Anlegeseite des Stützelements können Ölkammern ausgebildet sein, die zum Ausbilden eines Ölfilms zwischen der Anlegeseite des Stützelements und einer Innenseite des Walzenmantels dienen. Dieser Ölfilm kann beispielsweise 20 bis 50 µm dick sein und ist sehr steif, so dass darüber nahezu keine Schwingungsdämpfung erfolgt. Die Schwingungen des Walzenmantels werden also direkt auf das Stützelement übertragen, das entsprechend mit dem Walzenmantel innerhalb der Druckkammer schwingt und so die Schwingung auf das in der Druckkammer angeordnete Druckmedium überträgt. Das Stützelement kann als Schuh einer Schuhwalze ausgebildet sein, es können aber auch mehrere Stützelemente in entsprechend vielen Druckkammern axial nebeneinander angeordnet sein. Durch die Anordnung der Druckkammer im Joch kann diese nach außen relativ gut abgedichtet werden. Die Druckfluidleitungen liegen in einer Axialbohrung im Joch.

Es ist von Vorteil, wenn wenigstens ein Druckraum und die Druckfluidleitungen eine Baueinheit bilden. Eine solche Baueinheit lässt sich nach der Vormontage vom axialen Ende des Jochs her in die Axialbohrung einschieben.

Vorzugsweise sind in der Axialbohrung ein Druckraum und die Druckfluidleitungen hydraulisch gekoppelt. Dadurch ist wie bei herkömmlichen Rohrbündeln nur die Schaffung einer einzigen Verbindung mit der Druckkammer herzustellen. Die Druckkammer kann dann ohne weitere Maßnahmen auch mit dem Druckraum hydraulisch verknüpft sein. Günstig ist es, wenn der Druckraum innerhalb eines Membranspeichers ist. Membranspeicher sind häufig rund und bauen relativ klein. Dadurch kann auch der Durchmesser der Axialbohrung im üblichen Rahmen gehalten werden.

Es ist von Vorteil, wenn voneinander beabstandete Scheiben vorgesehen sind, in denen die Druckfluidleitungen gelagert sind. Dabei sollten sich die Scheiben zumindest teilweise mit ihrem Außenumfang an der Wandung der Axialbohrung abstützen. Dadurch wird eine eventuelle Baueinheit relativ steif und die Druckfluidleitungen werden auch im Betrieb schwingungssicher gehalten.

Bevorzugt ist, dass die Scheiben eine Radialbohrung aufweisen, die zu der Druckkammer ausgerichtet ist und die zumindest mit einer Druckfluidleitung in Verbindung steht. Eine derartige Anordnung ermöglicht es, die Radialbohrung beispielsweise über einen einschraubbaren Adapter mit der Druckkammer zu verbinden. Auf diese Weise ist die Versorgung der Druckkammer aus der Druckfluidleitung sicher gestellt.

Besonders bevorzugt ist es, wenn der Druckraum (ebenfalls) an der Scheibe angeschlossen ist. Dadurch wird die Baueinheit kompakt und stabil.

Vorteilhaft ist es, wenn zur Schwingungsvermeidung im Anschluss oder dem folgenden Kanal zu wenigstens einem Druckraum und/oder in der Druckfluidleitung zu wenigstens einer Druckkammer und/oder in einem Adapter eine Drosselstelle angeordnet ist. Die Drosseln arbeiten durch die entstehende Reibung des Druckfluids als "Energievernichter" und dämpfen auf diese Weise Vibrationen der Walze. Wenn zwei Drosseln vorgesehen sind, nämlich eine vor dem Druckraum und eine in der Druckfluidleitung, so kann die durch die Schwingungen des Walzenmantels bewegte Hydraulikflüssigkeit nicht nur über die erste Drosselstelle hin- und hergeschoben werden, sondern auch über die zweite Drosselstelle in mindestens einen Druckraum, dessen Volumen sich durch die entsprechenden Druckschwankungen verändert. Das besondere an zwei Drosseln ist dabei, dass man über die jeweiligen Drosselwiderstände die Jocheigenfrequenz und die Kontakteigenfrequenz des Mantels weitgehend unabhängig voneinander drosselnd beeinflussen kann. Dadurch wird das Auftreten von Barring vermindert und eine Standzeit der Walze verlängert.

Vorzugsweise sind mehrere Druckräume in Axialrichtung der Walze nebeneinander angeordnet. Die Speicher sind dann mit verschiedenen Druckkammern verbindbar. Die Druckräume können alle an unterschiedliche Scheiben angeschlossen werden und über sie mit einer zugehörigen Druckkammer in Verbindung stehen. Die Druckkammer kann sich beispielsweise in einem Membranspeicher befinden, wobei jenseits der Membran eine in der Regel gasbeaufschlagte Kammer existiert, über deren Gasdruck und Gasvolumen man zusätzlich Einfluss auf die Schwingungsdämpfung nehmen kann. Eine hermetisch dichte Ausbildung der Kammer hat den Vorteil, dass ein nahezu wartungsfreier Betrieb möglich ist.

In einer bevorzugten Ausführungsform sind eine Anzahl und/oder eine Querschnittsfläche und/oder eine Länge der Drosselstelle mit mindestens einem Stellelement veränderbar, das insbesondere als hydraulisches, elektrisches, magnetisches oder piezoelektrisches Stellelement ausgebildet ist. Dadurch ist es möglich, das System nachträglich auf einzelne Frequenzen abzustimmen. Es ist auch möglich, über einen bestimmten Zeitraum ein erstes Frequenzband zu dämpfen und in einem späteren Zeitraum ein weiteres Frequenzband. Insgesamt kann die Dämpfung maximiert werden, so dass sich letztlich die Standzeit der Walze verlängert.

Dabei ist besonders bevorzugt, dass mindestens ein Schwingungssensor am Walzenmantel und/oder am Joch und/oder am Stützelement und/oder in der Druckkammer angeordnet ist. Mit Hilfe dieses Schwingungssensors lässt sich die Schwingung des Walzenmantels direkt ermitteln und beispielsweise zur Ansteuerung des Stellelements verwenden. Dadurch ist eine Maximierung der Dämpfung möglich.

Die Erfindung wird im Folgenden anhand eines bevorzugten Ausführungsbeispiels in Verbindung mit den Zeichnungen beschrieben. Hierin zeigen:
- Fig. 1: einen Teillängsschnitt durch die Achse der Walze und
- Fig. 2: einen Ausschnitt aus einer dreidimensionalen Zeichnung der Baueinheit und
- Fig. 3: eine Walze nach dem Stand der Technik.

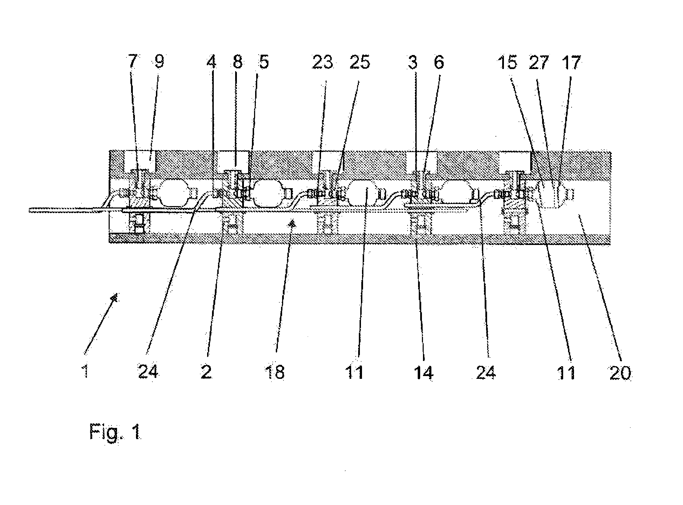

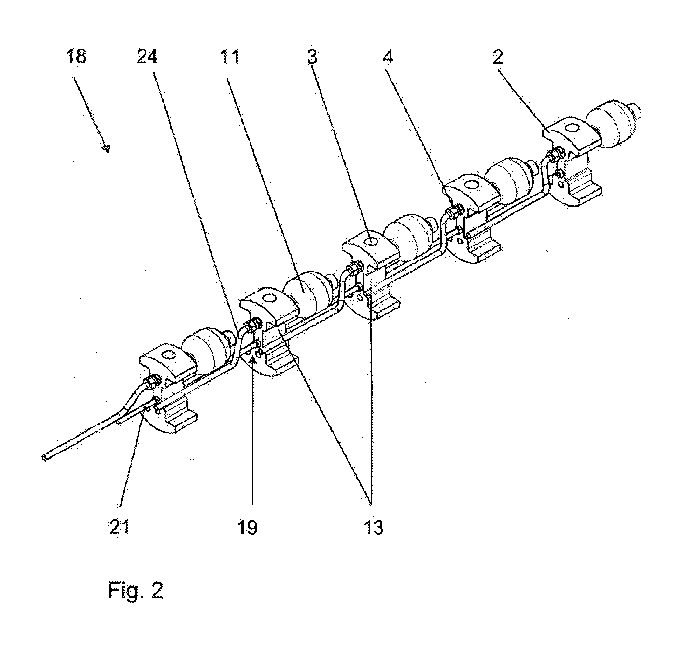

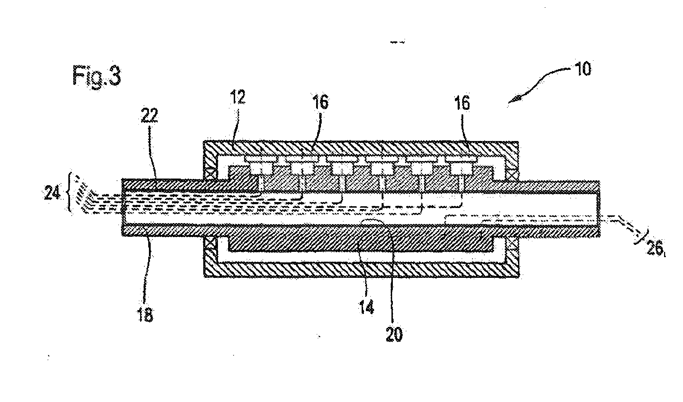

Da Fig. 1 und Fig. 2 nur die erfindungswesentlichen Bauteile der Walze zeigen wird zunächst der gesamte Erfindungsgegenstand, also eine Biegeeinstellwalze, anhand der den Stand der Technik darstellenden Fig. 3 erläutert.

Die Walze 10 weist ein durchgehendes und drehfest zu lagerndes Joch 14 auf. Auf diesem Joch 14 ist ein Mantel 12 drehbar gelagert. Dieser Mantel 12 drückt beispielsweise in einem Kalander gegen eine nicht dargestellte Gegenwalze und bildet so einen Behandlungsnip für eine Faserstoffbahn. Um den notwendigen geradlinigen Druck im Nip aufbringen zu können, stützen sich an dem Joch eine Reihe von hydraulischen Stützelementen 16 ab, die genau in Richtung des Nips wirken. Bei manchen Biegeeinstellwalzen sind zur Einstellung der Durchbiegung des Mantels 12 auch Stützelemente vorgesehen, die in Gegenrichtung Kräfte aufbringen.

Durch Anregungen kommt es vor, dass der Mantel 12 im Betrieb schwingt. Diese Schwingung überträgt sich über die Stützelemente auf das Druckfluid, das jedes Stützelement ggf. mit unterschiedlichen Fluiddrücken mit Druck beaufschlagt.

Die Heranführung des Druckfluids zu einer Druckkammer unter dem Stützelement erfolgt über Druckfluidleitungen 24. Entweder jedes Stützelement besitzt - wie in Fig. 3 dargestellt - eine eigene Druckfluidleitung 24 oder mehrere Stützelemente werden in einer sogenannten Zone gemeinsam durch eine Druckfluidleitung 24 versorgt. Alle diese Druckfluidleitungen 24 werden als Rohre in einer Axialbohrung 20 im Joch 14 untergebracht. Hinzu kommen oft noch Rückflussleitungen 26, die in der Axialbohrung 20 untergebracht werden müssen.

Dabei hat es sich als besonders vorteilhaft herausgestellt, alle Rohrleitungen 24, 26, beispielsweise untergebracht in einem Hüllrohr 22, als eine vormontierte Einheit in die Axialbohrung 20 einschiebbar zu gestalten.

Mit der Fig. 1 wird jetzt das Wesentliche der Erfindung erklärt. Dargestellt ist lediglich ein Längsschnitt durch einen Jochabschnitt einer erfindungsgemäßen Biegeausgleichswalze 1. Mantel 2 und Stützelemente 16 wurden zur besseren Übersichtlichkeit weggelassen, weil sie sowieso wie bei einer herkömmlichen Biegeausgleichswalze 10 verwendet werden. Das Joch 14 enthält Zylinderbohrungen 9, in denen Stützelemente 16, wie in Fig. 3 gezeigt, eingesetzt werden können. In der Zylinderbohrung 9 ist der radial innen liegende Bereich unterhalb des Stützelementes als Druckkammer 8 ausgebildet. Am Boden der Zylinderbohrung 9 ist ein Druckfluideintritt 7.

Das Joch 14 ist im relativ unkritischen Bereich, was die Widerstandsmomente anbelangt, zentral mit einer Axialbohrung 20 versehen. Auf der axialen Höhe der Stützelemente sind Scheiben 2 angeordnet. Diese Scheiben 2 sind so dick, dass zumindest eine radiale Bohrung 3 eingebracht werden kann. Vorteilhaft ist es, wenn seitlich der radialen Bohrung 3 noch Platz für eine Dichtung vorhanden ist. Von beiden Seiten einer Scheibe 2 ist ein jeweils ein Anschluss 4, 5 zu erkennen. An dem einen Anschluss 4 ist eine Druckfluidleitung 24 angebracht. Mit Vorteil ist in dem Anschluss noch eine erste Drosselstelle 23 integriert. An dem anderen Anschluss 5 ist ein Membranspeicher 11 angebracht. Wie im aufgeschnittenen letzten Speicher 11 der angezeigten Reihe von Druckspeichern zu erkennen, besitzt er einen Druckraum 15, dessen Volumen variabel ist. Denn innerhalb des Speichers 11 ist eine Kammer 17 von dem Druckraum durch eine elastische und flexible Wand 27 abgetrennt. In der Kammer 17 herrscht ein Gasdruck, der das Volumen des Druckraums 15 in Abhängigkeit vom momentanen Druck des ihn füllenden Druckfluids mitbestimmt. Auch an dem zweiten Anschluss 5 ist mit Vorteil eine "energieschluckende" zweite Drosselstelle 25 integriert.

Das in der Druckkammer 8 befindliche Druckmittel über die Drosselstelle 23 hin- und hergeschoben. In der Drosselstelle 23 wird dem System durch Reibung Energie entzogen. Dadurch erfolgt eine Schwingungsdämpfung. Die Größe der Drosselstelle 23 hat dabei großen Einfluss darauf, bei welcher Frequenz eine wirksame Schwingungsdämpfung erfolgt. Ist die Drosselstelle 23 zu klein, kann nur wenig Öl die Drosselstelle passieren, so dass ein eventuell im Betrieb notwendiges schnelles Absenken des Mantels 12 nicht möglich ist. Wenn die Drosselstelle 23 zu weit ist, ist auch der durch sie hervorgerufene Strömungswiderstand gering, so dass nur eine geringe Dämpfung erzielbar ist. Bei einer im Betrieb befindlichen Walze hat sich ein Gesamtquerschnitt in der Drosselstelle von 5-10 mm² in Form von 16 Drosselbohrungen als ein gegen die Jocheigenfrequenzen besonders wirkungsvoll dämpfender Wert herausgestellt.

Doch man will mit der Walze auch die Kontakteigenfrequenzen des Mantels mit der Gegenwalze dämpfen. Alleine über die Drosselstelle 23 ist dies oft nicht zu erreichen. Eine Verbesserung der Schwingungsdämpfung wird mit Hilfe des zusätzlichen Druckraums 15 erreicht. An dieser Stelle gibt es eine wesentliche Einstellmöglichkeit für die Dämpfung der höheren Frequenzen. Der Querschnitt, der zwischen dem Druckraum 15 und der Druckkammer 8 installierten zweiten Drossel 25 ist ausschlaggebend. Ein ein- bis zweifach so großer Drosselquerschnitt ist ideal geeignet, auch die hohen Schwingungsamplituden der Kontakteigenfrequenz des Mantels zu mildern.

Jeder Druckraum 15 bildet mit einer Kammer 17, einer zweiten Drosselstelle 25 und einer Wand 27 zwischen der Kammer und dem Druckraum jeweils einen Pulsationsdämpfer, der auf eine bestimmte Frequenz abgestimmt werden kann. Durch das Vorsehen mehrerer derartiger Pulsationsdämpfer, die jeweils auf eine bestimmte Frequenz abgestimmt sind, kann dabei eine Dämpfung über ein sehr breites Frequenzband erfolgen.

Durch den Boden der Zylinderbohrung 9 wird die radiale Bohrung 3 mit einem abgedichteten Adapter 6 versehen. Damit ist ein Fließweg für das Druckfluid von der Druckfluidleitung 24 zur Druckkammer 8 und zum Druckraum 15 geschaffen, je nach Bedarf über eine erste und/oder eine zweite Drosselstelle 23, 25.

Die Scheiben in Fig. 1 zeigen auch Anschlussmöglichkeiten und radiale Bohrungen auf der dem Nip abgewandten Seite (in der Zeichnung also unten), die dort allerdings nicht verwendet werden.

Mit Fig. 2 kann besonders gut verdeutlicht werden, dass alle "Innereien" der Axialbohrung 20 aus einer vormontierten Einheit 18 aus Rohrleitungen 24, 26 und Speichern 11 bestehen kann. Die Fig. 2 zeigt nämlich genau eine solche vormontierte Einheit 18. Um alle Druckfluidleitungen 24 nur von einem Walzenende aus in die Axialbohrung 20 eintreten lassen zu können, besitzen die Scheiben 2 Aussparungen 13, damit auch Scheiben 2 am anderen Ende der Walze über Druckfluidleitungen 24 erreichbar sind und so mit Druckfluid versorgt werden können. Die Scheiben erhalten dadurch eine knochenähnliche Form.

Für einen genau einzuhaltenden Abstand der Scheiben ist zumindest ein Abstandhalter 19, hier in Form einer Gewindestange 21 mit Muttern, verantwortlich. Die Gewindestange 21 durchzieht hierbei jeweils eine Bohrung in jeder Scheibe 2 und wird durch die Muttern fixiert. Selbstverständlich können hier auch mehrere Abstandhalter 19 eingesetzt werden, ggf. um eine Verdrehung der Scheiben gegeneinander zu verhindern. Allerdings müssen sie so angeordnet sein, dass eine gewisse Durchbiegung des Jochs aufgrund der Kräfte im Nip nicht zu Problemen führt.

### Bezugszeichenliste

- 1: Biegeausgleichswalze nach der Erfindung
- 2: Scheibe
- 3: Radiale Bohrung
- 4: Anschluss
- 5: Anschluss
- 6: Adapter
- 7: Druckfluideintritt
- 8: Druckkammer
- 9: Zylinderbohrung
- 10: Biegeausgleichswalze nach dem Stand der Technik
- 11: Membranspeicher
- 12: Mantel
- 13: Aussparung
- 14: Joch
- 15: Druckraum
- 16: Stützelement
- 17: Kammer
- 18: Vormontierbare Baueinheit
- 19: Abstandhalter
- 20: Axialbohrung
- 21: Gewindestange
- 22: Hüllrohr
- 23: Erste Drosselstelle
- 24: Rohrleitung, Druckfluidleitung
- 25: Zweite Drosselstelle
- 26: Rückflussleitung
- 27: Wand

## Patentansprüche

1. Biegeausgleichswalze, insbesondere für eine Papier- oder Kartonmaschine, mit einem umlaufenden Walzenmantel (12) und einem feststehenden Joch (14), das den Walzenmantel (12) axial durchsetzt, wobei der Walzenmantel (12) durch den Druck in mindestens zwei Druckkammern (8) radial nach außen belastbar ist, wobei die Druckkammern (8) mit in wenigstens einer Axialbohrung (20) im Joch (14) eingebrachten Druckfluidleitungen (24) verbunden sind, und wobei mindestens eine Druckkammer (8) über mindestens einen Anschluss (5) mit mindestens einem Druckraum (15) verbunden ist, der ein veränderbares Volumen aufweist, wobei der mindestens eine Druckraum (15), dessen Volumen sich durch entsprechende Druckschwankungen verändert, und die Druckfluidleitungen (24) benachbart in der Axialbohrung (20) untergebracht sind.

2. Biegeausgleichswalze nach Anspruch 1, **dadurch gekennzeichnet, dass** wenigstens ein Druckraum (15) und die Druckfluidleitungen (24) eine Baueinheit (18) bilden.

3. Biegeausgleichswalze nach Anspruch 1 oder 2, **dadurch gekennzeichnet, dass** in der Axialbohrung (20) ein Druckraum (15) und die Druckfluidleitungen (24) hydraulisch gekoppelt sind.

4. Biegeausgleichswalze nach einem der Ansprüche 1 bis 3, **dadurch gekennzeichnet, dass** der Druckraum (15) innerhalb eines Membranspeichers (11) ist.

5. Biegeausgleichswalze nach einem der Ansprüche 1 bis 4, **dadurch gekennzeichnet, dass** voneinander beabstandete Scheiben (2) vorgesehen sind, in denen die Druckfluidleitungen (24) gelagert sind.

6. Biegeausgleichswalze nach Anspruch 5, **dadurch gekennzeichnet, dass** die Scheiben (2) eine Radialbohrung aufweisen, die zu der Druckkammer (8) ausgerichtet ist und die zumindest mit einer Druckfluidleitung (24) in Verbindung steht.

7. Biegeausgleichswalze nach einem der Ansprüche 5 bis 6, **dadurch gekennzeichnet, dass** der Druckraum (15) an der Scheibe (2) angeschlossen ist.

8. Biegeausgleichswalze nach einem der Ansprüche 1 bis 7, **dadurch gekennzeichnet, dass** im Anschluss (5) oder einem folgenden Kanal zu wenigstens einem Druckraum (15) und/oder in der Druckfluidleitung (24) zu wenigstens einer Druckkammer (8) und/oder in einem Adapter (6) eine Drosselstelle (23, 25) angeordnet ist.

9. Biegeausgleichswalze nach einem der Ansprüche 1 bis 8, **dadurch gekennzeichnet, dass** mehrere Druckräume (15) in Axialrichtung der Walze (1) nebeneinander angeordnet sind.

10. Biegeausgleichswalze nach Anspruch 8, **dadurch gekennzeichnet, dass** eine Anzahl und/oder eine Querschnittsfläche und/oder eine Länge der Drosselstelle (23, 25) mit mindestens einem Stellelement veränderbar ist, das insbesondere als hydraulisches, elektrisches, magnetisches oder piezoelektrisches Stellelement ausgebildet ist.

11. Biegeausgleichswalze nach einem der Ansprüche 1 bis 10, **dadurch gekennzeichnet, dass** mindestens ein Schwingungssensor am Walzenmantel (12) und/oder am Joch (14) und/oder an einem Stützelement (16) und/oder in der Druckkammer (8) angeordnet ist.

## Claims

1. Controlled deflection roll, in particular for a paper or board machine, having a revolving roll shell (12) and a stationary yoke (14) which passes axially through the roll shell (12), it being possible for the roll shell (12) to be loaded radially towards the outside by the pressure in at least two pressure chambers (8), the pressure chambers (8) being connected to pressurized fluid lines (24) introduced into at least one axial bore (20) in the yoke (14), and at least one pressure chamber (8) being connected via at least one connection (5) to at least one pressure chamber (15) which has a variable volume, the at least one pressure chamber (15), the volume of which is varied by corresponding pressure fluctuations, and the pressurized fluid lines (24) being accommodated adjacently in the axial bore (20).

2. Controlled deflection roll according to Claim 1, **characterized in that** at least one pressure chamber (15) and the pressurized fluid lines (24) form one structural unit (18).

3. Controlled deflection roll according to Claim 1 or 2, **characterized in that** a pressure chamber (15) and the pressurized fluid lines (24) are coupled hydraulically in the axial bore (20).

4. Controlled deflection roll according to one of Claims 1 to 3, **characterized in that** the pressure chamber (15) is inside a diaphragm accumulator (11).

5. Controlled deflection roll according to one of Claims 1 to 4, **characterized in that** discs (2) spaced apart from one another are provided, in which the pressurized fluid lines (24) are mounted.

6. Controlled deflection roll according to Claim 5, **characterized in that** the discs (2) have a radial bore which is aligned with the pressure chamber (8) and which is connected at least to one pressurized fluid line (24).

7. Controlled deflection roll according to either of Claims 5 and 6, **characterized in that** the pressure chamber (15) is connected to the disc (2).

8. Controlled deflection roll according to one of Claims 1 to 7, **characterized in that** a throttling point (23, 25) is arranged in the connection (5) or in a following duct to at least one pressure chamber (15) and/or in the pressurized fluid line (24) to at least one pressure chamber (8) and/or in an adapter (6).

9. Controlled deflection roll according to one of Claims 1 to 8, **characterized in that** a plurality of pressure chambers (15) are arranged beside one another in the axial direction of the roll (1).

10. Controlled deflection roll according to Claim 8, **characterized in that** a number and/or a cross-sectional area and/or a length of the throttling point (23, 25) can be varied by at least one actuating element, which is formed in particular as a hydraulic, electric, magnetic or piezoelectric actuating element.

11. Controlled deflection roll according to one of Claims 1 to 10, **characterized in that** at least one vibration sensor is arranged on the roll shell (12) and/or on the yoke (14) and/or on a supporting element (16) and/or in the pressure chamber (8).

## Revendications

1. Rouleau à compensation de flexion, en particulier pour une machine à papier ou carton, comprenant une enveloppe de rouleau périphérique (12) et un mandrin fixe (14) qui traverse axialement l'enveloppe de rouleau (12), l'enveloppe de rouleau (12) pouvant être sollicitée radialement vers l'extérieur par la pression dans au moins deux chambres de pression (8), les chambres de pression (8) étant connectées à des conduites de fluide sous pression (24) réalisées dans au moins un alésage axial (20) dans le mandrin (14), et au moins une chambre de pression (8) étant connectée par le biais d'au moins un raccordement (5) à au moins un espace de pression (15) qui présente un volume variable, l'au moins un espace de pression (15), dont le volume varie sous l'effet de variations correspondantes de la pression, et les conduites de fluide sous pression (24), étant montés en position adjacente dans l'alésage axial (20).

2. Rouleau à compensation de flexion selon la revendication 1, **caractérisé en ce qu'**au moins un espace de pression (15) et les conduites de fluide sous pression (24) forment une unité structurelle (18).

3. Rouleau à compensation de flexion selon la revendication 1 ou 2, **caractérisé en ce qu'**un espace de pression (15) et les conduites de fluide sous pression (24) sont accouplés hydrauliquement dans l'alésage axial (20).

4. Rouleau à compensation de flexion selon l'une quelconque des revendications 1 à 3, **caractérisé en ce que** l'espace de pression (15) est situé à l'intérieur d'un accumulateur à membrane (11).

5. Rouleau à compensation de flexion selon l'une quelconque des revendications 1 à 4, **caractérisé en ce que** des disques (2) espacés les uns des autres sont prévus, dans lesquels disques sont supportées les conduites de fluide sous pression (24).

6. Rouleau à compensation de flexion selon la revendication 5, **caractérisé en ce que** les disques (2) présentent un alésage radial qui est orienté vers la chambre de pression (8), et qui est en liaison au moins avec une conduite de fluide sous pression (24).

7. Rouleau à compensation de flexion selon l'une quelconque des revendications 5 à 6, **caractérisé en ce que** l'espace de pression (15) est raccordé au disque (2).

8. Rouleau à compensation de flexion selon l'une quelconque des revendications 1 à 7, **caractérisé en ce qu'**un étranglement (23, 25) est disposé dans le raccordement (5) ou dans un canal suivant allant à au moins un espace de pression (15) et/ou dans la conduite de fluide sous pression (24) allant à au moins une chambre de pression (8) et/ou dans un adaptateur (6).

9. Rouleau à compensation de flexion selon l'une quelconque des revendications 1 à 8, **caractérisé en ce que** plusieurs espaces de pression (15) sont disposés les uns à côté des autres dans la direction axiale du rouleau (1).

10. Rouleau à compensation de flexion selon la revendication 8, **caractérisé en ce qu'**un nombre et/ou une surface en section transversale et/ou une longueur d'étranglement (23, 25) peuvent être modifiés avec au moins un élément de réglage, qui est réalisé notamment sous forme d'élément de réglage hydraulique, électrique, magnétique ou piézoélectrique.

11. Rouleau à compensation de flexion selon l'une quelconque des revendications 1 à 10, **caractérisé en ce qu'**au moins un capteur d'oscillation est disposé sur l'enveloppe de rouleau (12) et/ou sur le mandrin (14) et/ou sur un élément de support et/ou dans la chambre de pression (8).
